# NEUE EUROPÄISCHE PATENTSCHRIFT

(11) **EP 0 847 939 B2**
(45) Veröffentlichungstag und Bekanntmachung des Hinweises auf die Entscheidung über den Einspruch: **25.03.2009**
(45) Hinweis auf die Patenterteilung: 23.05.2001
(21) Anmeldenummer: 97121957.1
(22) Anmeldetag: 12.12.1997
(51) Int. Cl.: B65G 1/137, B65G 1/08

(54) **Verfahren und Vorrichtung zum Kommissionieren**
Method of order picking and device therefor
Dispositif et procédé pour rassembler et préparer des marchandises en détail

(30) Priorität: 12.12.1996 DE 19651756; 09.05.1997 DE 19719651
(43) Veröffentlichungstag der Anmeldung: 17.06.1998
(73) Patentinhaber: WITRON Logistik + Informatik GmbH, 92711 Parkstein (DE)
(72) Erfinder: Winkler, Walter, 92711 Parkstein (DE)
(74) Vertreter: Betten & Resch

(56) Entgegenhaltungen:
- EP-A- 0 652 167
- DE-A- 3 100 020
- DE-A- 3 716 503
- DE-A- 4 200 641
- DE-U- 29 711 710
- US-A- 5 582 497
- SCHEID: "Rechnergesteuerte Kommissionerung" FÖRDERN UND HEBEN, Bd. 34, Nr. 8, August 1984, ASCHAFFENBURG, Seiten 598-601, XP002059621
- ESMEIJER: "Het ABC-Effect" TRANSPORT + OPSLAG, Bd. 13, Nr. 9, 31.August 1989, DOETINCHEM, Seiten 46-48, XP000037395

## Beschreibung

Die Erfindung betrifft ein Verfahren zum Kommissionieren von in Behältern befindlichen Artikeln, wobei die entsprechenden Behälter von mindestens einem Behälterlager mindestens einem Kommissionier-Arbeitsplatz zugeführt und an mehreren, im Bereich des Kommissionier-Arbeitsplatzes befindlichen Entnahmepositionen zum Zwecke der Entnahme der Artikel bereitgestellt werden, wobei jeder Entnahmeposition ein Durchlaufkanal zugeordnet ist, jeder Durchlaufkanal an seinem dem Kommissionier-Arbeitsplatz zugewandten Ende die jeweilige Entnahmeposition aufweist, in der der Kommissionierer dem Behälter Artikel entnehmen kann, wobei jeder Durchlaufkanal weiterhin an seinem dem Kommissionier-Arbeitsplatz abgewandten Bereich einen Übergabebereich aufweist, wo die vom Behälterlager zugeführten Behälter an den Durchlaufkanal übergeben werden und wobei jeder Durchlaufkanal eine Transporteinrichtung zum Transport der übergebenen Behälter vom Übergabebereich zur Entnahmeposition aufweist.

Weiterhin betrifft die Erfindung eine Anlage zum Kommissionieren von in Behältern befindlichen Artikeln, wobei die entsprechenden Behälter mittels einer Fördereinrichtung von mindestens einem Behälterlager mindestens einem Kommissionier-Arbeitsplatz zugeführt und über Durchlaufkanäle an mehreren, im Bereich des Kommissionier-Arbeitsplatzes befindlichen Entnahmepositionen zum Zwecke der Entnahme der Artikel bereitgestellt werden, gemäß dem Gattungsbegriff des Anspruchs 5.

Soweit im vorstehenden und im folgenden von "Behältern" die Rede ist, soll dies nicht einschränkend verstanden werden; vielmehr umfaßt die vorliegende Erfindung auch solche Verfahren und Anlagen, in denen andere Transporteinheiten wie beispielsweise Tabletts, Pakete (Kartonagen) etc. verwendet werden, um das Kommissioniergut zu lagern und zu transportieren.

Bei der Kommissionierung von Artikeln unterscheidet man im wesentlichen zwei Artikeltypen, nämlich Schnellläufer und Langsamläufer. Schnellläufer sind solche Artikel, die häufig bzw. in größeren Mengen benötigt werden, während Langsamläufer solche Artikel sind, die selten bzw. in kleinen Mengen benötigt werden.

Gemäß einem derzeitigen Stand der Technik findet die Kommissionierung von Schnellläufer-Artikeln direkt von der Palette statt. Hierzu werden die Paletten im Kommissionierbereich mittels Stapler am Boden oder in Durchlaufkanälen bereitgestellt; die Kommissionierung erfolgt dann durch das Kommissionierpersonal. Die Kommissionierung von Langsamläufer-Artikeln findet in der Regel von Paletten (bei großvolumigen Teilen) in Bodenlägern bzw. in Fachbodenlägern (bei Kleinteilen) nach dem Prinzip "Mann zur Ware" statt, d.h. der Kommissionierer geht zu den entsprechenden Lägern und entnimmt die gewünschten Artikel. Kleinteile werden gewöhnlich direkt in Fachbodenlägern gelagert und kommissioniert, und zwar ebenfalls nach dem Prinzip "Mann zur Ware".

Aufgrund der vorstehend beschriebenen Lagerung der Artikel ist ein vergleichsweise hoher Platzbedarf (Fläche) erforderlich. Weiterhin wird als nachteilig empfunden, daß dann, wenn die Kommissionierung für einen Auftrag durch ein und denselben Kommissionierer erfolgen soll, dieser längere Wege zurücklegen muß, sofern der Auftrag aus Artikeln des Schnell- und Langsamläuferbereiches besteht, nachdem er Artikel aus mehreren Lagerbereichen zusammenzutragen hat.

Falls andererseits die Aufträge in den jeweiligen Lagerbereichen nur teilbearbeitet werden, d.h. die Kommissionierung der Langsamläufer-Artikel und der Schnellläufer-Artikel erfolgt unabhängig voneinander und durch unterschiedliches Personal, bedeutet dies eine Splittung des Kommissionierauftrags und eine damit verbundene höhere potentielle Fehlerrate sowie Mehraufwand bei der anschließenden Zusammenführung.

Weiterhin sind aufgrund der Lagerung der Schnellläufer-Artikel einerseits und der Langsamläufer-Artikel andererseits in verschiedenen Lagerbereichen mehrere Kommissionierprinzipien notwendig wie z.B. "Ware zum Mann" und "Mann zur Ware". Dies erfordert entweder den Einsatz von mehreren, auf das jeweilige Kommissionierprinzip spezialisierten Kommissionierern oder aber die Kommissionierer müssen mehrere Kommissionierprinzipien erlernen. Dies wiederum bedeutet zum einen eine gewisse Unflexibilität des Gesamtsystems und erfordert zum anderen eine höhere Qualifikation des Personals. Bei der Kommissionierung aus Fachbodenlägern (insbesondere bei Kleinteilen) ist zudem eine geringe Kommissioniersicherheit und dadurch eine vergleichsweise hohe Fehlerrate gegeben.

Die Druckschrift "Fördern und Heben", Bd. 34, Nr. 8, Aug. 1984, Seiten 598-601, diskutiert diverse Steuerungstechniken in Kommissioniersystemen einschliesslich Steuerungstechniken für Schnelläufer und für Langsamläufer.

Der Erfindung liegt im wesentlichen die Aufgabe zugrunde, die Effizienz eines Verfahrens zum Kommissionieren, bei dem sowohl Schnellläufer-Artikel als auch Langsamläufer-Artikel kommissioniert werden müssen, zu steigern.

Weiterhin liegt der Erfindung die Aufgabe zugrunde, eine entsprechende Anlage zu schaffen, die ein effizienteres Kommissionieren ermöglicht.

Die Aufgabe wird durch das Verfahren gemäß Anspruch 1 und die Anlage gemäß Anspruch 5 gelöst.

Da dem Kommissionierer an seinem Arbeitsplatz sowohl die Schnellläufer-Artikel als auch die Langsamläufer-Artikel zur Verfügung gestellt werden, werden längere Wege des Kommissionierers vermieden. Die Kommissionierung erfolgt für beide Artikelgattungen nach dem Prinzip "Ware zum Mann", so daß der Einsatz eines höher qualifizierten Personals vermieden werden kann. Nachdem Behälter mit Langsamläufer-Artikeln nach der Entnahme der gewünschten Artikel zum Behälterlager zurückgeführt werden können, werden Behälter-Stellplätze am Arbeitsplatz des Kommissionierers nicht unnötig durch nicht benötigte Ware blockiert. Zudem kann sowohl für Langsamläufer-Artikel als auch für Schnellläufer-Artikel das gleiche Lager verwendet werden. Es wird eine kompakte Lagerung möglich (keine getrennten Lagerbereiche für Langsamläufer- und Schnellläufer-Artikel) und es kann eine einheitliche Lagertechnik verwendet werden.

Das erfindungsgemäße System ist somit gegenüber dem bekannten Stand der Technik effizienter, weist eine niedrigere Fehlerrate auf und erfordert weniger Fläche und einen geringeren Personalbedarf.

In bevorzugter Weiterbildung der Erfindung wird zum Rücktransport der Langsamläufer-Behälter von den Langsamläufer-Durchlaufkanälen am Behälterlager die gleiche Fördereinrichtung verwendet wie zum Zuführen der Behälter vom Behälterlager zu den Durchlaufkanälen, wodurch in kostensparender Weise vorhandene Einrichtungen doppelt genutzt werden können.

Die gerätetechnischen Anforderungen an die erfindungsgemäße Anlage können besonders gering gehalten werden, weil ein Teil der Durchlaufkanäle eine Rückgabeposition für die Langsamläufer-Behälter aufweist, die gegenüber der Entnahmeposition in Richtung zum Übergabebereich hin zurückversetzt ist, wobei die Fördereinrichtung, welche insbesondere ein Regalförderzeug sein kann, Mittel zur Aufnahme der in der Rückgabeposition befindlichen Behälter aufweist. Durch das Zurückversetzen der Langsamläufer-Behälter nach der Entnahme wird der Abstand der Behälter zu einer am Übergabelbereich befindlichen Fördereinrichtung verkürzt, so daß diese Fördereinrichtung den in der Rückgabeposition befindlichen Behälter auf einfache Weise übernehmen kann. Das Zurückführen der Langsamläufer-Behälter von der Entnahmeposition in die Rückgabeposition kann hierbei vom Kommissionierer von Hand erfolgen.

Die Transporteinrichtung der Durchlaufkanäle ist als geneigte Bahn, insbesondere Rollenbahn ausgebildet, auf der die im Übergabebereich aufgegebenen Behälter aufgrund Schwerkraft in die Entnahmeposition gleiten. Ein eigener Antrieb für die Transporteinrichtung der Durchlaufkanäle erübrigt sich in diesem Fall.

Die Rückgabeposition ist in diesem Fall durch einen wahlweise aktivierbaren Anschlag für die Behälter definiert, wobei in bevorzugter Weiterbildung der Anschlag durch Zurückschieben des Behälters von der Entnahmeposition in die Rückgabeposition aktivierbar ist.

Die Durchlaufkanäle für die Langsamläufer unterscheiden sich von den Durchlaufkanälen der Schnellläufer praktisch lediglich durch den zusätzlichen aktivierbaren Anschlag bzw. Sperre. Dies ermöglicht es auch, solche Durchlaufkanäle, die für Langsamläufer ausgerüstet sind, wahlweise auch für Schnellläufer zu benutzen, indem der Anschlag bzw. die Sperre deaktiviert wird. Der Anschlag bzw. die Sperre kann sowohl ein aktives Bauteil (z.B. mit Pneumatik) als auch ein passives Bauteil (z.B. Mechanik-Element mit Rückstellfeder o.ä.) sein.

In bevorzugter Weiterbildung der Erfindung ist die erfindungsgemäße Anlage weiterhin gekennzeichnet durch ein Hochregallager mit mindestens einem Lagerregal, in das die Durchlaufkanäle integriert sind, und durch mindestens ein Regalförderzeug, das die Behälter von den Stellplätzen des Lagerregals den Durchlaufkanälen zuführt und das die in der Rückgabeposition der Durchlaufkanäle befindlichen Langsamläufer-Behälter zu den Stellplätzen des Lagerregals zurückführt und dort einlagert. Hierdurch ergibt sich eine besonders platzsparende Anordnung mit kürzestmöglichen Förderwegen.

Weiterhin weist das mindestens eine Lagerregal vorzugsweise doppelt-tiefe Stellplätze auf und die Rückgabepositionen der Langsamläufer-Behälter innerhalb der Durchlaufkanäle entsprechen den Positionen der dem Regalförderzeug abgewandten Stellplätze des doppelt-tiefen Lagerregals, d.h., die Rückgabepositionen sind im wesentlichen senkrecht über oder unter den entsprechenden Stellplätzen angeordnet, so daß das Regalförderzeug die auf diesen Rückgabepositionen befindlichen Behälter ebenso übernehmen kann wie die auf den hinten liegenden Stellplätzen des Lagerregals befindlichen Behälter. Die zum Be- und Entladen des Lagerregals vorgesehenen Regalförderzeuge benötigen daher für die Rückführung der Langsamläufer-Behälter keine zusätzliche Mechanik.

Eine insgesamt besonders kompakte Anlage, bei der bei besonders kurzen Förderwegen der zu- und abzuführenden Behälter einem Kommissionier-Arbeitsplatz eine maximale Anzahl von Durchlaufkanälen bzw. Entnahmepositionen zugeordnet werden kann, ergibt sich dann, wenn in bevorzugter Weiterbildung der Erfindung die Anlage eine Einheit umfaßt, die aus zwei parallelen Regalgassen, mindestens einem entlang einer jeden Regalgasse verfahrbaren Regalförderzeug, beidseitig der beiden Regalgassen angeordneten Lagerregalen, Durchlaufkanälen in den beiden mittleren, einander zugewandten Lagerregalen sowie einem zwischen diesen beiden mittleren Lagerregalen angeordneten Kommissionier-Arbeitsplatz besteht. Vorzugsweise ist eine Mehrzahl solcher Einheiten nebeneinander angeordnet und weiterhin eine Mehrzahl solcher Einheiten in Richtung der Regalgassen gesehen hintereinander angeordnet, wobei jede durch die Mehrzahl solcher Einheiten gebildete Regalgasse mindestens ein Regalförderzeug aufweist.

Weitere vorteilhafte Merkmale der Erfindung ergeben sich aus den übrigen Unteransprüchen sowie aus der nachfolgenden Beschreibung, in der ein bevorzugtes Ausführungsbeispiel der vorliegenden Erfindung anhand der Zeichnung näher erläutert wird. In der Zeichnung zeigen in halbschematischer bzw. schematischer Darstellung:
Figur 1 eine Draufsicht auf einen Teil einer erfindungsgemäßen Anlage,
Figur 2 eine Ansicht auf einen Teil der Kommissionier-Arbeitsplätze der Anlage gemäß Figur 1,
Figur 3 eine teilweise geschnittene Seitenansicht eines Kommissionier-Arbeitsplatzes, und
Figur 4 eine Graphik zur Veranschaulichung des der Erfindung zugrundeliegenden Prinzips.

Die Kommissionier-Anlage umfaßt ein Hochregallager mit parallel angeordneten Lagerregalen 10, 12, 14 und 16, in denen Transportbehälter 18 in doppelt-tiefen Fächern gelagert sind. Zwischen den Lagerregalen 10 und 12 sowie 14 und 16 sind Regalgassen 20 bzw. 22 definiert, in denen Regalförderzeuge 24, 26 verfahrbar sind. Die Regalförderzeuge bedienen die an den Regalgassen 20 gelegenen Lagerregale 10 und 12 und die Regalförderzeuge 26 bedienen die an den Regalgassen 22 gelegenen Lagerregale 14 und 16. Sie weisen jeweils geeignete Lastaufnahmemittel auf, die ausfahrbar sind, um die an den vorderen oder hinteren Stellplätzen der Lagerregale befindlichen Transportbehälter ein- oder auszulagern.

Je zwei nicht benachbarte (also durch weitere Lagerregale 10, 16 getrennte) Lagerregale 12, 14 sind durch einen Kommissionier-Loop 30 verbunden, an den die Regalförderzeuge 24, 26 die von den Regalen 12 bis 14 entnommenen Transportbehälter 18 abgeben. Weiterhin sind benachbarte Regalgassen 20, 22 innerhalb eines Kommissionier-Loops 30 mit (nicht näher dargestellten) Verbindungsbahnen zum Austausch von Transportbehältern ausgestattet.

Die jeweils benachbarten Lagerregale 12, 14 sind voneinander beabstandet, um hierzwischen Platz für Kommissionier-Arbeitsplätze zu schaffen. Zu diesem Zweck ist zwischen den Lagerregalen 12, 14 eine Plattform 36 für die Kommissionierer 38 vorgesehen. Desweiteren können sich die Kommissionier-Arbeitsplätze auch auf dem Boden befinden. Dann ist keine Plattform nötig.

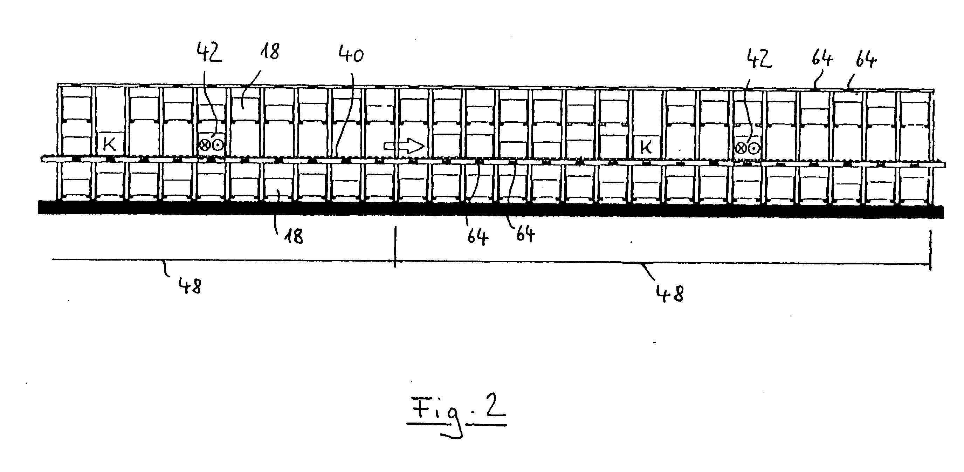

Im Bereich der Kommissionier-Arbeitsplätze 34 ist dem jeweiligen Lagerregal 12 in Höhe des entsprechenden Abschnitts des Kommissionier-Loops 30 eine Fördereinrichtung 40 vorgelagert, die parallel zum Lagerregal bzw. zum Kommissionier-Loop verläuft und mit dem Kommissionier-Loop über Verbindungsbahnen 42 (vgl. Figur 2) verbunden ist, um die Kundenauftragsbehälter vom Kommissionier-Loop dem einzelnen Arbeitsplatz zuzuführen bzw. die bearbeiteten Kundenauftragsbehälter zum Kommissionier-Loop zurückzuführen.

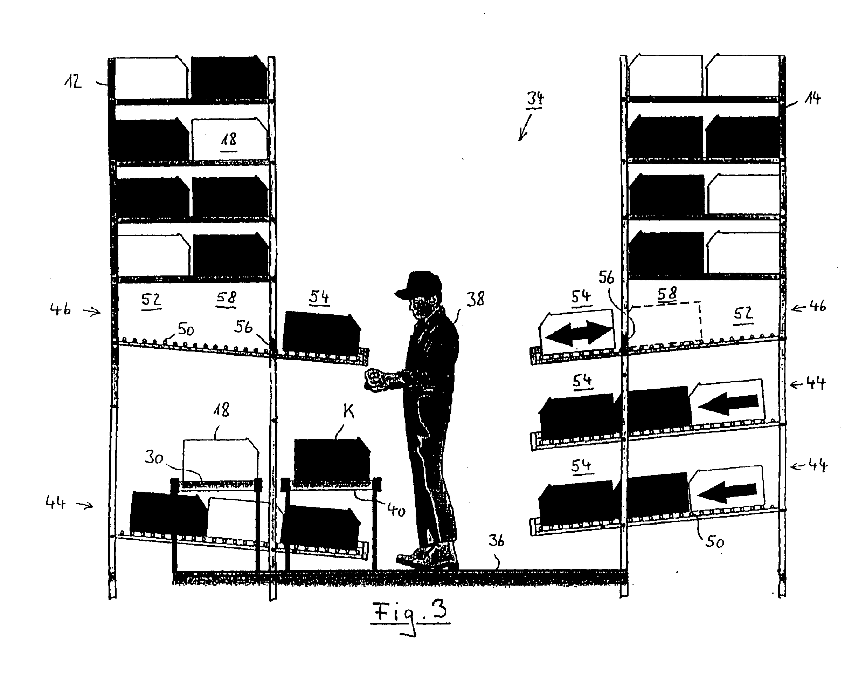

Im Bereich der Arbeitsplätze 34 sind eine Vielzahl von Durchlaufkanälen 44, 46 ausgebildet, und zwar in der Darstellung gemäß Figur 3 auf der rechten Seite drei Ebenen übereinander und auf der linken Seite (hier wird die mittlere Ebene vom Kommissionier-Loop 30 bzw. der Fördereinrichtung 40 eingenommen) zwei Ebenen übereinander. Jedem Arbeitsplatz sind im Falle des beschriebenen Ausführungsbeispiels auf beiden Seiten und in jeder Ebene jeweils 16 nebeneinanderliegende Durchlaufkanäle zugeordnet. Eine solche Einheit, die einem Arbeitsplatz zugeordnet ist, wird im folgenden auch "Kommissionierbahnhof" 48 genannt (vgl. Figur 2).

Die Durchlaufkanäle 44, 46 weisen jeweils eine zum Arbeitsplatz 34 hin geneigte Rollenbahn 50, einen zum jeweiligen Regalförderzeug 24 bzw. 26 hin offenen Übergabebereich 52 sowie am arbeitsplatzseitigen Ende eine Entnahmeposition 54 auf. Die Länge einer jeden Rollenbahn 50 ist so ausgebildet, daß sie drei hintereinander angeordnete Transportbehälter 18 aufnehmen kann. Die jeweilige Entnahmeposition 54 wird durch einen am Ende jeder Rollenbahn 50 angeordneten Anschlag für die Transportbehälter definiert. Die mittels der Regalförderzeuge 24, 26 aus den Lagerregalen ausgelagerten Transportbehälter werden vom Lastaufnahmemittel des jeweiligen Regalförderzeugs den Übergabebereichen 52 der Durchlaufkanäle zugeführt und gleiten von hier aufgrund Schwerkraft über die Rollenbahnen 50 in ihre jeweilige Entnahmeposition bzw., falls diese bereits besetzt ist, in die hieran anschließende, mittlere Position oder, falls auch diese bereits besetzt ist, in die hinterste Position.

Einige der Durchlaufkanäle, nämlich die in der Zeichnung mit der Bezugsziffer 46 bezeichneten Durchlaufkanäle, weisen eine Sperre 56 auf, die in eine Sperrposition aktivierbar bzw. in eine Durchlaßposition deaktivierbar ist. Beim Einlaufen eines Transportbehälters in einen Durchlaufkanal 46 ist die Sperre 56 stets deaktiviert, so daß der Behälter bis in seine Entnahmeposition 54 gleiten kann, während sie beim Zurückschieben eines Behälters in den Übergabebereich 58 - wie weiter unten näher erläutert werden wird - aktiviert wird, so daß dann der im Übergabebereich befindliche Transportbehälter an der Sperre 56 anschlägt und somit im Übergabebereich 58 gehalten wird. Die Steuerung der Sperre 56 kann wahlweise mechanisch oder auf elektrischem/elektronischem Wege erfolgen.

Die Kommissionierung der einzelnen Kundenaufträge erfolgt mit Hilfe des beleglosen Kommissioniersystems und der automatischen Behälterfördertechnik. Die Kundenaufträge werden im überlagerten Warenwirtschaftssystem erfaßt und angenommen und nach einer eventuellen Verfügbarkeitsprüfung entweder in zyklischen Abständen oder online an das Lagerverwaltungssystem übergeben. Das Lagerverwaltungssystem übernimmt anschließend die Optimierung der Kundenaufträge im Hinblick auf eine effektive Kommissionierung.

Die Kundenauftragsbehälter werden über den Kommissionier-Loop 30 und eine Verbindungsbahn 42 der Fördereinrichtung 40 zugeführt und von hier aus an einem Kommissionierplatz abgestellt. Ein entsprechender, am Kommissionierplatz abgestellter Kundenauftragsbehälter ist in den Figuren 2 und 3 mit "K" bezeichnet. Als potentielle Kundenauftragsbehälter können die durch die Kommissionierung entstehenden leeren Transportbehälter und/oder Transportbehälter aus einem speziell hierfür vorgesehenen Leerbehälterspeicher in der Behälterfördertechnik verwendet werden.

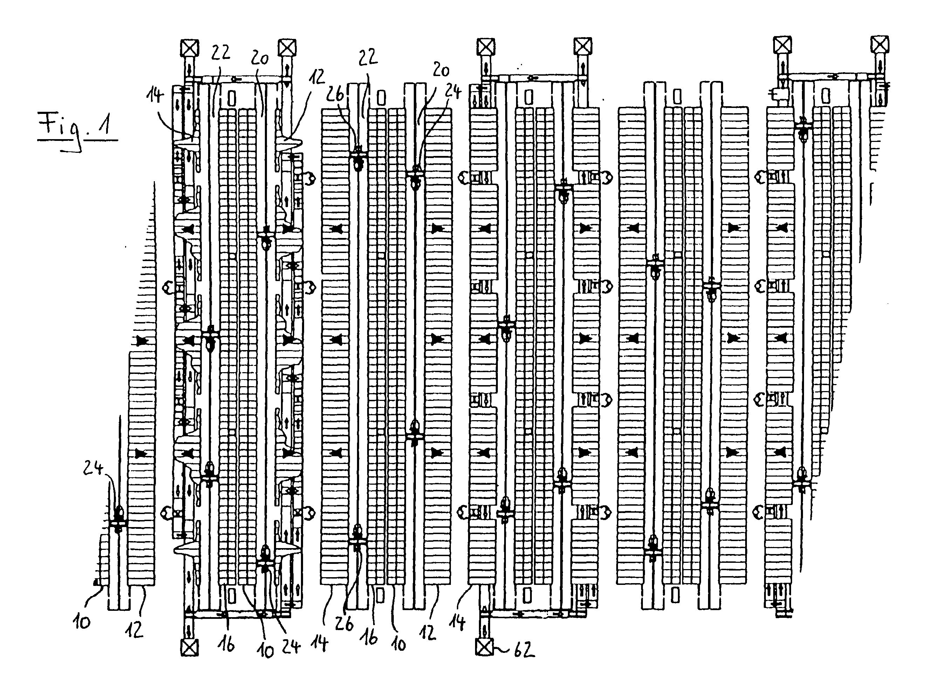

Jedem der Kommissionier-Loops 30 sind jeweils acht Kommissionierbahnhöfe 48 bzw. Kommissionierbereiche zugeordnet, nämlich vier auf jeder Seite. Jeder Kommissionier-Loop 30 verbindet die einzelnen Kommissionierbahnhöfe 48 und sorgt für den Austausch der Behälter, für den Abtransport der vollen Kundenauftragsbehälter sowie für die Versorgung mit leeren Behältern. Jeder Kundenauftragsbehälter wird mit hoher Wahrscheinlichkeit an einem einzigen Kommissionier-Loop komplett fertig gefüllt. Die restlichen Kundenauftragsbehälter müssen noch einen zweiten oder gegebenfalls auch noch weitere Kommissionier-Loops anfahren. Zu diesem Zweck werden sie über Vertikalförderer 62 (vgl. Figur 1) zu einer Ausgleichsfördertechnikebene transportiert und können hierüber den Vertikalförderer des nächsten Kommissionier-Loops erreichen.

Die in den Lagerregalen befindlichen Transportbehälter 18 werden, je nach ihrem Inhalt, innerhalb des Lagerverwaltungssystems als Langsamläufer oder als Schnellläufer definiert. Schnellläufer-Transportbehälter werden von den Regalförderzeugen stets den Schnellläufer-Durchlaufkanälen 44 zugeführt, während Langsamläufer-Transportbehälter stets den Langsamläufer-Durchlaufkanälen 46 zugeführt werden. In den Schnellläufer-Durchlaufkanälen 44 können maximal drei Transportbehälter des jeweiligen Artikels bereitgestellt werden. Werden durch die Kommissionierung zwei Behälter leer, so werden automatisch zwei Transportbehälter des gleichen Artikels vom Regalförderzeug von hinten nachgeschoben (gegebenenfalls auch andere Artikel). Sobald ein Schnellläufer-Lagerbehälter leer ist, wird er vom Kommissionierer 38 von Hand aus der Entnahmeposition 54 des Durchlaufkanals 44 entnommen und auf die Fördereinrichtung 40 gesetzt, von wo aus der leere Behälter dem Kommissionier-Loop 30 zugeführt wird.

Langsamläufer-Transportbehälter bekommen die Langsamläufer-Durchlaufkanäle 46 zugewiesen und in jedem Langsamläufer-Durchlaufkanal 46 wird jeweils nur ein einziger Langsamläufer-Transportbehälter bereitgestellt. Nach dem Kommissioniervorgang des entsprechenden Langsamläufer-Artikels wird der Langsamläufer-Lagerbehälter vom Kommissionierer manuell um ca. eine Behälterlänge nach hinten über die Sperre 56 hinweg geschoben und die Sperre 56 aktiviert. Diese Sperre verhindert dann das Zurückrollen des Langsamläufer-Transportbehälters in die Entnahmeposition 54. Der Langsamläufer-Transportbehälter, der sich dann in der Rückgabeposition 58 befindet (gestrichelte Position in Figur 3), kann dann mittels eines Teleskops des Lastaufnahmemittels des Regalförderzeugs vom Regalförderzeug übernommen werden und zurück in die Lagerregale eingelagert werden.

Der Kommissionierer wird durch geeignete Anzeigemittel hinsichtlich der einzelnen Kommissioniervorgänge geführt, wozu überhalb der einzelnen Durchlaufkanäle Fachanzeigen 64 vorgesehen sind (vgl. Figur 2), an denen die Entnahmemenge und weitere Informationen dargestellt werden. Auch der Vorgang des Zurückschiebens eines Lagerbehälters bei Langsamläufer-Durchlaufkanälen 44 wird dem Kommissionierer mit Hilfe der Fachanzeigensymbolik visualisiert. Hat der Kommissionierer, der Aufforderung der Fachanzeige entsprechend, den entsprechenden Transportbehälter zurückgeschoben und dies an der Fachanzeige quittiert, so wird das Regalförderzeug automatisch veranlaßt, diesen Langsamläufer-Transportbehälter abzuholen und wieder in die Lagerregale einzulagern.

Die in der Kommissionierung abgeschlossenen Kundenauftragsbehälter werden aus den Kommissionier-Loops 30 mittels Vertikalbehälterförderern in die Ein-/Auslagerebene der Fördertechnik transportiert und von hier aus nach diversen Kriterien weitertransportiert.

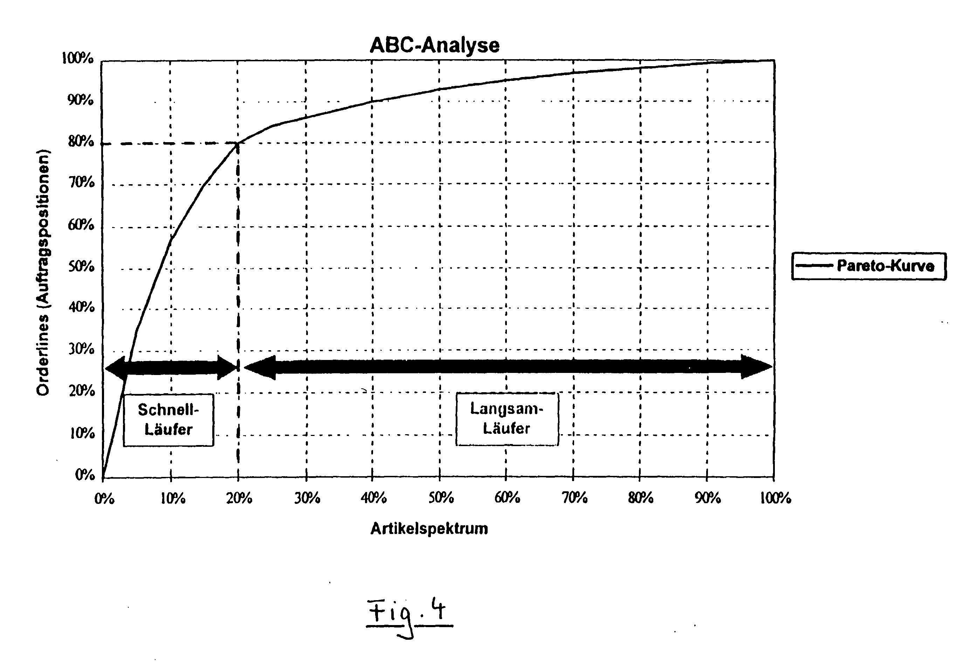

Die vorliegende Erfindung baut auf dem Paretoprinzip auf, das in Figur 4 als Diagramm skizziert ist. Figur 4 zeigt den Zusammenhang zwischen Artikelspektrum und Auftragspositionen. Hieraus ergibt sich, daß 80% des Orderline-Volumens mit 20% der Artikel realisiert werden, während 20% des Orderline-Volumens mit 80% der Artikel realisiert werden. Die erstgenannten 20% sind die Schnellläufer-Artikel, die anderen 80% die Langsamläufer-Artikel. Die Erfindung geht nun davon aus, daß die Schnellläufer-Artikel permanent zur Kommissionierung bereitgestellt werden, während die Langsamläufer-Artikel in ein und demselben System dynamisch bereitgestellt werden, d.h. je nach Bedarf.

Hierdurch läßt sich die effektive Wegstrecke beim Kommissionieren auf 25% und weniger verkürzen. Weiterhin ist hierdurch eine hohe Artikelzahl durch ein und dasselbe System abdeckbar. Die Erfindung ermöglicht es, die installierte Technik gleichzeitig für die Bereitstellung der Kommissionierung zu nutzen. Die Schnellläufer werden im Durchlaufbetrieb bereitgestellt, die Langsamläufer an Wechselstellplätzen. Aufgrund des identischen Kommissioniervorgangs für Schnell- und Langsamläufer sowie der Kommissionierung sämtlicher Artikel in einem einzigen System ergibt sich der Vorteil einer einheitlichen Technologie. Durch eine flexible und dynamische Artikel-Klassifizierung in Schnell- und Langsamläufer ergibt sich eine hohe Flexibilität. Aus der Verkürzung der effektiven Kommissionierwege durch dynamische Wechselplätze und eine effiziente Bedienerführung mittels belegloser Kommissionierung (Fachanzeigen) folgt eine hohe Pickleistung. Aufgrund der optimalen Pickleistung ergibt sich eine hohe Personalauslastung. Platzeinsparung wird durch die intelligente und temporäre Bereitstellung der Langsamläufer auf Wechselstellplätzen sowie aufgrund der reduzierten Kommissionierflächen durch Wechselplatz-Strategie und integriertem, mechanisiertem Vorratslager erzielt. Insgesamt zeichnet sich das erfindungsgemäße System durch eine hohe Wirtschaftlichkeit aus.

### Bezugszeichenliste

- 10: Lagerregale
- 12: Lagerregale
- 14: Lagerregale
- 16: Lagerregale
- 18: Transportbehälter
- 20: Regalgassen
- 22: . Regalgassen
- 24: Regalförderzeuge
- 26: Regalförderzeuge
- 30: Kommissionier-Loop
- 34: Kommissionier-Arbeitsplätze
- 36: Plattform
- 38: Kommissionierer
- 40: Fördereinrichtung
- 42: Verbindungsbahnen
- 44: Durchlaufkanäle
- 46: Durchlaufkanäle
- 48: Kommissionierbahnhof
- 50: Rollenbahn
- 52: Übergabebereich
- 54: Entnahmeposition
- 56: Sperre
- 58: Rückgabeposition
- 62: Vertikalförderer
- 64: Fachanzeige

## Patentansprüche

1. Verfahren zum Kommissionieren von in Behältern (18) befindlichen Artikeln, wobei die entsprechenden Behälter von mindestens einem Behälterlager (10, 12, 14, 16) mindestens einem Kommissionier-Arbeitsplatz (34) zugeführt und an mehreren, im Bereich des Kommissionier-Arbeitsplatzes befindlichen Entnahmepositionen (54) zum Zwecke der Entnahme der Artikel bereitgestellt werden, wobei
- jeder Entnahmeposition (54) ein Durchlaufkanal (44, 46) zugeordnet ist,
- jeder Durchlaufkanal (44, 46) an seinem dem Kommissionier-Arbeitsplatz zugewandten Ende die jeweilige Entnahmeposition (54) aufweist, in der der Kommissionierer dem Behälter Artikel entnehmen kann,
- jeder Durchlaufkanal (44, 46) an seinem dem Kommissionier-Arbeitsplatz abgewandten Bereich einen Übergabebereich (52) aufweist, wo die vom Behälterlager zugeführten Behälter an den Durchlaufkanal übergeben werden, und
- jeder Durchlaufkanal (44, 46) eine Transporteinrichtung (50) zum Transport der übergebenen Behälter vom Übergabebereich (52) zur Entnahmeposition (54) aufweist, welche Transporteinrichtung als geneigte Bahn, insbesondere Rollenbahn (50) ausgebildet ist, auf der die im Übergabebereich (52) aufgegebenen Behälter (18) aufgrund Schwerkraft in die Entnahmeposition (54) gleiten,
wobei:
- die einzelnen Behälter (18) als Schnellläufer-Behälter oder als Langsamläufer-Behälter definiert werden,
- die einzelnen Durchlaufkanäle (44, 46) teilweise als Durchlaufkanäle (44) für Schnellläufer und teilweise als Durchlaufkanäle (46) für Langsamlvufer definiert werden,
- die Schnellläufer-Behälter den Schnellläufer-Durchlaufkanälen (44) und die Langsamläufer-Behälter den Langsamläufer-Durchlaufkanälen (46) zugeführt werden,
- sobald ein in der Entnahmeposition (54) befindlicher Schnellläufer-Behälter entleert ist, er aus seiner Entnahmeposition (54) vom Durchlaufkanal (44) entfernt wird und ein weiterer, im Durchlaufkanal befindlicher Schnellläufer-Behälter in die Entnahmeposition verbracht wird,
- den Langsamläufer-Durchlaufkanälen (46) die Langsamläufer-Behälter so zugeführt werden, daß sich immer nur ein einziger Langsamläufer-Behälter im Langsamläufer-Durchlaufkanal befindet,
- nach Entnahme der gewünschten Artikel aus dem Langsamläufer-Behälter der noch teilweise gefüllte Langsamläufer-Behälter entgegen der Zuführrichtung in Richtung zum Übergabebereich (52) auf eine gegenüber der Entnahmeposition (54) zurückweisende Rückgabeposition (58) bewegt wird, welche Rückgabeposition durch einen wahlweise zur Verwendung des Durchlaufkanals als Durchlaufkanal für Langsamläufer-Behälter aktivierbar bzw. zur Verwendung des Durchlaufkanals als Durchlaufkanal für Schnellläufer-Behälter deaktivierbaren Anschlag (56) definiert ist und anschließend zu dem mindestens einen Behälterlager zurücktransportiert und dort eingelagert.

2. Verfahren nach Anspruch 1, **dadurch gekennzeichnet, daß** zum Rücktransport der Langsamläufer-Behälter von den Langsamläufer-Durchlaufkanälen (46) zum Behälterlager die gleiche Fördereinrichtung (26) verwendet wird wie zum Zuführen der Behälter vom Behälterlager zu den Durchlaüfkanälen (44, 46).

3. Verfahren nach Anspruch 1 oder 2, **dadurch gekennzeichnet, daß** in den Schnellläufer-Durchlaufkanälen (44) in der Regel mindestens zwei Schnellläufer-Behälter bereitgestellt werden.

4. Verfahren nach einem der Ansprüche 1 bis 3, **dadurch gekennzeichnet, daß** die jeweilige Definition der Durchlaufkanäle (44, 46) als Durchlaufkanäle für Schnellläufer (44) bzw. als Durchlaufkanäle für Langsamläufer (46) entsprechend den jeweiligen Erfordernissen mittels eines Lagerverwaltungssystems geändert wird.

5. Anlage zum Kommissionieren von in Behältern (18) befindlichen Artikeln, wobei die entsprechenden Behälter mittels mindestens einer Fördereinrichtung (24, 26) von mindestens einem Behälterlager (10, 12, 14, 16) mindestens einem Kommissionier-Arbeitsplatz (34) zugeführt und über Durchlaufkanäle (44, 46) an mehreren, im Bereich des Kommissionier-Arbeitsplatzes befindlichen Entnahmepositionen (54) zum Zwecke der Entnahme der Artikel bereitgestellt werden, wobei jeder Durchlaufkanal
- an seinem dem Kommissionier-Arbeitsplatz (34) zugewandten Ende die jeweilige Entnahmeposition (54) aufweist, in der der Kommissionierer (38) dem Behälter Artikel entnehmen kann,
- an seinem dem Kommissionier-Arbeitsplatz (34) abgewandten Bereich einen Übergabebereich (52) aufweist, wo die Fördereinrichtung (24, 26) die vom Behälterlager zugeführten Behälter an den Durchlaufkanal übergibt, und
- eine Transporteinrichtung (50) zum Transport der übergebenen Behälter vom Übergabebereich (52) zur Entnahmeposition (54) aufweist, welche Transporteinrichtung als geneigte Bahn, insbesondere Rollenbahn (50) ausgebildet ist, auf der die im Übergabebereich (52) aufgegebenen Behälter (18) aufgrund Schwerkraft in die Entnahmeposition (54) gleiten, wobei
die einzelnen Behälter (18) als Schnelläufer-Behälter oder als Langsamläufer-Behälter definiert sind,
daß ein Teil (44) der Durchlaufkanäle als Durchlaufkanäle für Schnelläufer-Behälter und ein anderer Teil (46) als Durchlaufkanäle für Langsamläufer-Behälter eingerichtet ist und die Langsamläufer-Durchlaufkanäle eine durch wahlweise zur Verwendung des Durchlaufkanals als Durchlaufkanal für Langsamläufer-Behälter aktivierbaren bzw. zur Verwendung des Durchlaufkanals als Durchlaufkanal für Schnelläufer-Behälter deaktivierbaren Anschlag (56) definierte Rückgabeposition (58) für die Behälter (18) aufweisen, die gegenüber der Entnahmeposition (54) in Richtung zum Übergabebereich (52) hin zurückversetzt ist, und
daß die Fördereinrichtung (24, 26) Mittel zur Aufnahme der in der Rückgabeposition (58) der Durchlaufkanäle befindlichen Behälter aufweist.

6. Anlage nach Anspruch 5, **dadurch gekennzeichnet, daß** der Anschlag (56) durch Zurückschieben des Behälters (18) von der Entnahmeposition (54) in die Rückgabeposition (58) aktivierbar ist.

7. Anlage einschließlich hierzu beförderte Behälter (18) nach einem der Ansprüche 5 bis 6, **dadurch gekennzeichnet, daß** die Durchlaufkanäle (44, 46) so bemessen sind, daß sie jeweils mindestens zwei, vorzugsweise drei Behälter (18) aufnehmen können.

8. Anlage nach Anspruch 7, **dadurch gekennzeichnet, daß** die Rückgabeposition (58) gegenüber der Entnahmeposition (54) um etwa eine Behälterlänge zurückversetzt ist.

9. Anlage nach einem der Ansprüche 5 bis 8, **gekennzeichnet durch** ein Hochregallager mit mindestens einem Lagerregal (10, 12, 14, 16), in das die Durchlaufkanäle (44, 46) integriert sind, sowie mindestens ein Regalförderzeug (24, 26), das die Behälter (18) von den Stellplätzen des Lagerregals den Durchlaufkanälen (44, 46) zuführt und das die in der Rückgabeposition (58) der Durchlaufkanäle (46) befindlichen Behälter zu den Stellplätzen der Lagerregale zurückführt.

10. Anlage nach Anspruch 9, **dadurch gekennzeichnet, daß** das mindestens eine Lagerregal (10, 12, 14, 16) doppelt-tiefe Stellplätze aufweist und die Rückgabepositionen (58) innerhalb eines Durchlaufkanals (46) den Positionen der dem Regalförderzeug abgewandten Stellplätze des doppelt-tiefen Lagerregals entsprechen.

11. Anlage nach Anspruch 9 oder 10, **gekennzeichnet durch** eine Einheit bestehend aus
- zwei parallelen Regalgassen (20, 22),
- mindestens seinem entlang einer jeden Regalgasse verfahrbaren Regalförderzeug (24, 26),
- beidseitig der beiden Regalgassen angeordneten Lagerregalen (10, 12; 14, 16),
- Durchlaufkanälen (44, 46) in den beiden mittleren, einander zugewandten Lagerregalen (12, 14), und
- einem zwischen diesen beiden Lagerregalen (12, 14) angeordneten Kommissionier-Arbeitsplatz (34).

12. Anlage nach Anspruch 11, **dadurch gekennzeichnet, daß** eine Mehrzahl solcher Einheiten nebeneinander angeordnet sind.

13. Anlage nach Anspruch 11 oder 12, **dadurch gekennzeichnet, daß** eine Mehrzahl solcher Einheiten in Richtung der Regalgassen gesehen hintereinander angeordnet sind, wobei jede hierdurch gebildete Regalgasse (20, 22) mindestens ein Regalförderzeug (24, 26) aufweist.

## Claims

1. Method for order picking articles located in containers (18), wherein the corresponding containers are delivered from at least one container store (10, 12, 14, 16) to at least one order picking workstation (34) and made available at a plurality of picking positions (54) located in the region of the order picking workstation for the purpose of picking the articles, wherein
- a through-channel (44, 46) is associated with each picking position (54),
- at its end which faces the order picking workstation each through-channel (44, 46) comprises the respective picking position (54) in which the order picker can pick articles from the container,
- at its region which is remote from the order picking workstation each through-channel (44, 46) comprises a transfer region (52) where the containers delivered from the container store are transferred to the through-channel, and
- each through-channel (44, 46) comprises a transport device (50) for transporting the transferred containers from the transfer region (52) to the picking region (54), which transport device is formed as an inclined track, in particular a roller track (50), on which the containers (18) loaded in the transfer region (52) slide on account of gravity into the picking position (54), wherein
- the individual containers (18) are defined as fast-moving containers or as slow-moving containers,
- the individual through-channels (44, 46) are defined in some cases as through-channels (44) for fast movers and in some cases as through-channels (46) for slow movers.
- the fast-moving containers are delivered to the fast-moving through-channels (44) and the slow-moving containers are delivered to the slow-moving through-channels (46),
- as soon as a fast-moving container located in the picking position (54) is emptied, it is removed out of its picking position (54) from the through-channel (44) and a further fast-moving container located in the through-channel is brought into the picking position,
- the slow-moving containers are delivered to the slow-moving through-channels (46) so that just one single slow-moving container is always located in the slow-moving through-channel,
- after the desired articles have been picked out of the slow-moving container, the slow-moving container, still partly full, is moved contrary to the delivery direction in the direction of the transfer region (52) to a return position (58) which is set back with respect to the picking position (54), which return position is defined by a stop (56) which can either be activated for using the through-channel as a through-channel for slow-moving containers or deactivated for using the through-channel as a through-channel for fast-moving containers, and subsequently transported back to the at least one container store and stored here.

2. Method according to Claim 1, **characterised in that** the same conveying device (26) is used to transport the slow-moving containers back from the slow-moving through-channels (46) to the container store as is used to deliver the containers from the container store to the through-channels (44, 46).

3. Method according to Claim 1 or 2, **characterised in that** at least two fast-moving containers are as a rule made available in the fast-moving through-channels (44).

4. Method according to any one of Claims 1 to 3, **characterised in that** the respective definition of the through-channels (44, 46) as hrough-channels for fast movers (44) or as through-channels for slow-movers (46) is changed according to the respective requirements by means of a store management system.

5. Installation for order picking articles located in containers (18), wherein the corresponding containers are delivered from at least one container store (10, 12, 14, 16) to at least one order picking workstation (34) by means of at least one conveying device (24, 26) and made available via through-channels (44, 46) at a plurality of picking positions (54) located in the region of the order picking workstation for the purpose of picking the articles, wherein each through-channel
- comprises at its end which faces the order picking workstation (34) the respective picking position (54) in which the order picker (38) can pick articles from the container,
- comprises at its region which is remote from the order picking workstation (34) a transfer region (52) where the conveying device (24, 26) transfers the containers delivered from the container store to the through-channel, and
- comprises a transport device (50) for transporting the transferred containers from the transfer region (52) to the picking region (54), which transport device is formed as an inclined track, in particular as a roller track (50), on which the containers (18) loaded in the transfer region (52) slide on account of gravity into the picking position (54), wherein
the individual containers (18) are defined as fast-moving containers or as slow-moving containers,
that a number (44) of the through-channels are set up as through-channels for fast-moving containers and another number (46) are set up as through-channels for slow-moving containers, and the slow-moving through-channels comprise a return position (58) for the containers (18) which is set back with respect to the picking position (54) in the direction of the transfer region (52) and is defined by a stop (56) which can either be activated for using the through-channel as a through-channel for slow-moving containers or deactivated for using the through-channel as a through-channel for fast-moving containers, and
that the conveying device (24, 26) comprises means for accommodating the containers located in the return position (58) of the through-channels.

6. Installation according to Claim 5, **characterised in that** the stop (56) can be activated by pushing the container (18) back from the picking position (54) into the return position (58).

7. Installation including containers (18) located herein according to any one of Claim 5 to 6, **characterised in that** the through-channels (44, 46) are dimensioned so that they can in each case accommodate at least two, preferably three containers (18).

8. Installation according to Claim 7, **characterised in that** the return position (58) is set back with respect to the picking position (54) by approximately one container length.

9. Installation according to any one of Claims 5 to 8, **characterised by** a high-rise warehouse with at least one storage rack (10, 12, 14, 16), into which the through-channels (44, 46) are integrated, as well as at least one storage/retrieval machine (24, 26), which delivers the containers (18) from the set-down places of the storage rack to the through-channels (44, 46) and returns the containers located in the return position (58) of the through-channels (46) to the set-down places of the storage racks.

10. Installation according to Claim 9, **characterised in that** the at least one storage rack (10, 12, 14, 16) has double-deep set-down places and the return positions (58) within one through-channel (46) correspond to the positions of the set-down places of the double-deep storage rack which are remote from the storage/retrieval machine.

11. Installation according to Claim 9 or 10, **characterised by** a unit consisting of
- two parallel gangways (20, 22),
- at least one storage/retrieval machine (24, 26) which can travel along each gangway,
- storage racks (10, 12; 14, 16) disposed on both sides of the two gangways,
- through-channels (44, 46) in the two central storage racks (12, 14) facing one another, and
- an order picking workstation (34) disposed between these two storage racks (12, 14).

12. Installation according to Claim 11, **characterised in that** a plurality of units of this kind are disposed next to one another.

13. Installation according to Claims 11 or 12, **characterised in that,** viewed in the direction of the gangways, a plurality of units of this kind are disposed one behind the other, wherein each gangway (20, 22) formed by this means comprises at least one storage/retrieval machine (24, 26).

## Revendications

1. Procédé pour rassembler et préparer des articles se trouvant dans des récipients (18), les récipients correspondants étant fournis, depuis au moins un entrepôt à récipients (10, 12, 14, 16) à au moins un poste de travail de dispositif de préparation (34) et fournis à plusieurs positions de prélèvement (54), se trouvant dans la zone du poste de travail de préparateur, dans le but de prélever les articles, où
- à chaque position de prélèvement (54) est associé un canal de circulation (44, 46),
- chaque canal de circulation (44, 46) présente à son extrémité, tournée vers le poste de travail de préparateur, la position de prélèvement (54) respective, à laquelle le préparateur peut prélever des articles du récipient,
- chaque canal de circulation (44, 46) présente, sur sa zone opposée au poste travail de préparateur, une zone de transfert (52) à laquelle les récipients amenés de l'entrepôt à récipient sont transférés au canal de circulation, et
- chaque canal de circulation (44, 46) présente un dispositif de transport (50) pour assurer le transport des récipients transférés, de la zone de transfert (52) à la position de prélèvement (54), le dispositif de transport étant réalisé sous la forme de piste inclinée, en particulier une piste à rouleaux (50), sur laquelle, du fait de la force de la gravité, les récipients (18) amenés dans la zone de transfert (52) glissent pour aller à la position de prélèvement (54), où
- les différents récipients (18) sont définis comme étant des récipients à déplacement rapide ou des récipients à déplacement lent,
- les différents canaux de circulation (44, 46) sont définis partiellement comme étant des canaux de circulation (44) pour des éléments à déplacement rapide et partiellement comme étant des canaux de circulation (46) pour des éléments à déplacement lent,
- les récipients à déplacement rapide sont amenés aux canaux de circulation à déplacement rapide (44) et les récipients à déplacement lent sont amenés aux canaux à déplacement lent (46),
- dès qu'un récipient à déplacement rapide, se trouvant à la position de prélèvement (54), est vidé, il est enlevé de sa position de prélèvement (54) du canal de circulation (44) et un autre récipient à déplacement rapide, se trouvant dans le canal de circulation, est placé à la position de prélèvement,
- les récipients à circulation lente sont amenés aux canaux de circulation lente (46) de manière qu'il n'y ait toujours qu'un seul récipient à circulation lente dans le canal à circulation lente,
- après prélèvement des articles souhaités hors du récipient à circulation lente, le récipient à circulation lente, encore partiellement rempli, est déplacé à l'encontre de la direction d'amenée, dans la direction de la zone de transfert (52), depuis une position de retour (58) en retrait par rapport à la position de prélèvement (54), cette position de retour étant définie par une butée (56), au choix susceptible d'être activée pour utilisation du canal de circulation comme canal de circulation pour des récipients à déplacement lent, ou susceptible d'être désactivée pour utilisation du canal de circulation comme canal de circulation pour des récipients à déplacement rapide, puis retransporté au au moins un entrepôt à récipients et y est entreposé.

2. Procédé selon la revendication 1, **caractérisé en ce que,** pour effectuer le transport de retour des récipients à circulation lente des canaux à circulation lente (46) à l'entrepôt à récipients, on utilise le même dispositif de transport (26) que celui utilisé pour amener les récipients de l'entrepôt à récipients aux canaux de circulation (44, 46).

3. Procédé selon la revendication 1 ou 2, **caractérisé en ce que,** en règle générale, au moins deux récipients à circulation rapide sont placés dans les canaux à circulation rapide (44).

4. Procédé selon l'une des revendications 1 à 3, **caractérisé en ce que** la définition respective des canaux de circulation (44, 46), en tant que canaux de circulation pour des éléments à circulation rapide (44) ou comme canaux de circulation pour des éléments à circulation lente (46), est modifiée de manière correspondante aux exigences respectives, au moyen d'un système de gestion de stocks,

5. Installation de préparation d'articles se trouvant dans des récipients (18), récipients correspondants étant amenés à l'aide d'au moins un dispositif d'alimentation (24, 26), d'au moins un entrepôt à récipients (10, 12, 14, 16), à au moins un poste de travail de préparateur (34) et étant fournis par des canaux de circulation (44, 46) en plusieurs positions de prélèvement (54) se trouvant dans la zone du poste de travail de préparateur, dans le but de prélever les articles, où chaque canal de circulation
- présente, à son extrémité tournée vers le poste de travail de préparateur (34), la position de prélèvement (54) respective à laquelle le préparateur (38) peut prélever des articles du récipient,
- présente, sur sa zone opposée au poste de travail de préparateur (34), une zone de transfert (52) à laquelle le dispositif d'alimentation (24, 26) transfère au canal de circulation les récipients ayant été amenés de l'entrepôt à récipients, et
- présente un dispositif de transport (50) pour assurer le transport des récipients transférés, de la zone de transfert (52) à la position de prélèvement (54), le dispositif de transport étant réalisé sous la forme de piste inclinée, en particulier une piste à rouleaux (50), sur laquelle, du fait de la force de la gravité, les récipients (18) amenés dans la zone de transfert (52) glissent pour aller à la position de prélèvement (54),
où
- les différents récipients (18) sont définis comme étant des récipients à déplacement rapide ou des récipients à déplacement lent,
- une partie (44) des canaux de circulation sont définis comme étant des canaux de circulation (44) pour des éléments à déplacement rapide et une autre partie (46) sont définis comme étant des canaux de circulation pour des éléments à déplacement lent, et les canaux de circulation pour des éléments à déplacement lent présentent pour les récipients (18) une position de retour (58) définie par une butée (56), au choix susceptible d'être activée pour utilisation du canal de circulation comme canal de circulation pour des récipients à déplacement lent, ou susceptible d'être désactivée pour utilisation du canal de circulation comme canal de circulation pour des récipients à déplacement rapide, la position de retour étant en retrait par rapport à la position de prélèvement (54), dans la direction de la zone de transfert (52), et
le dispositif d'alimentation (24, 26) présente des moyens pour recevoir les récipients se trouvant en position de retour (58) des canaux de circulation.

6. Installation selon la revendication 5, **caractérisée en ce que** la butée (56) est susceptible d'être activée par rétractation du récipient (18), de la position de prélèvement (54) à la position de retour (58).

7. Installation, y compris les récipients (18) présents en elle, selon l'une des revendications 5 à 6, **caractérisée en ce que** les canaux de circulation (44, 46) sont de dimensions faisant qu'ils peuvent chacun recevoir au moins deux, de préférence trois récipients (18).

8. Installation selon la revendication 7, **caractérisée en ce que** la position de retour (58) est décalée d'environ une longueur de récipient par rapport à la position de prélèvement (54).

9. Installation selon l'une des revendications 5 à 8, **caractérisée par** un entrepôt à rayonnages en hauteur, ayant au moins un rayonnage de stockage (10, 12, 14, 16), dans lequel sont intégrés les canaux de circulation (44, 46), ainsi qu'au moins un dispositif d'alimentation de rayonnages (24, 26), qui amène les récipients (18) des postes de placement du rayonnage de stockage aux canaux de circulation (44, 46) et qui retourne, aux postes de placement des rayonnages de stockage, les récipients se trouvant à la position de retour (58) des canaux de circulation (46).

10. Installation selon la revendication 9, **caractérisée en ce que** l'au moins un rayonnage de stockage (10, 12, 14, 16) présente des emplacements de placement de profondeur double et les positions de retour (58), à l'intérieur d'un canal de circulation (46), correspondent aux positions des postes de placement, éloignés au dispositif d'alimentation de rayonnages, du rayonnage de stockage à double profondeur.

11. Installation selon la revendication 9 ou 10, **caractérisée par** un ensemble constitué de
- deux voies à rayonnages (20, 22) parallèles,
- au moins un dispositif d'alimentation de rayonnages (24, 26) déplaçable dans chaque voie à rayonnages,
- des rayonnages de stockage (10, 12 ; 14, 16) disposés des deux côtés des voies à rayonnages,
- des canaux de circulation (44, 46) dans les deux rayonnages de stockage (12, 14) centraux, tournés l'un vers l'autre, et
- un poste de travail de préparateur (34), disposé entre ces deux rayonnages de stockage (12, 14).

12. Installation selon la revendication 11, **caractérisée en ce qu'**une pluralité de tels ensembles sont disposés les uns à côté des autres.

13. Installation selon la revendication 11 ou 12, **caractérisée en ce qu'**une pluralité de tels ensembles sont disposés les uns derrière les autres en observant dans la direction des voies à rayonnages, chaque voie à rayonnages (20, 22), ainsi constituée, présentant au moins un dispositif d'alimentation de rayonnages (24, 26).
